# EUROPEAN PATENT SPECIFICATION

(11) **EP 2 359 694 B1**
(45) Date of publication and mention of the grant of the patent: **06.01.2016**
(21) Application number: 11157553.6
(22) Date of filing: 10.05.2004
(51) Int. Cl.: A01N 59/00, A01N 59/02, A01N 25/22, A01P 1/00, C02F 1/50, C02F 1/76, A01N 41/08, A01N 43/64

(54) **Preparation of concentrated bromine solutions and high activity bromine solids**
Herstellung von konzentrierten Brominlösungen und Brominfeststoffe mit hoher Aktivität
Préparation de solutions concentrées de brome et solides au brome à grande activité

(43) Date of publication of application: 24.08.2011
(62) Divisional of application: 10158856.4
(73) Proprietor: Enviro Tech Chemical Services Inc., Modesto, CA 95358 (US)
(72) Inventor: Howarth, Jonathan, N., Modesto, CA 95355 (US); Harvey, Michael, S., Modesto, CA 95358 (US)
(74) Representative: Tomkinson, Alexandra

(56) References cited:
- WO-A1-00/64806
- WO-A1-99/62339
- WO-A1-03/093171
- WO-A1-2004/039159

## Description

### BACKGROUND OF THE INVENTION

### Field of the Invention

The invention relates to methods for the preparation of concentrated aqueous bromine solutions and high activity bromine-containing solids using elemental bromine or bromine chloride. The products are used as microbiocides in water treatment.

### Description of the Related Art

Single feed bromine biocide solutions are available from a number of sources and many methods to manufacture these products have been reported. These methods fit into two general categories: those that employ sodium hypochlorite solutions with a source of bromide ion, and those that employ elemental bromine or bromine chloride.

The prior art methods that use a sodium hypochlorite solution with a source of bromide ion yield a stabilized solution with a maximum active ingredient concentration of 14% as Br₂ (6.4% as Cl₂). For example, U. S. patent nos. 5,683,654, 5,795,487, 5,942,126, and 6,136,205 all describe a method to manufacture a single feed, liquid bromine biocide by mixing an aqueous hypochlorite solution with bromide ion sources followed by introduction of a stabilizer agent. The method requires a complex two-vessel reaction. In the first step, NaBr and NaOCl solutions were mixed and sufficient time was allowed to permit the formation of a sodium hypobromite (NaOBr) solution. In the second step, this was then introduced to a solution of the stabilizer agent maintained at 50°C. The disadvantage of this method is that the concentration of the stabilized bromine product is limited by the concentration of NaOCl bleach that is commercially available. In fact, despite using the highest strength grade of industrial NaOCl bleach, the bromine content of the resulting stabilized liquid bromine solution was only about 14% as Br₂ (6.4% as Cl₂).

The prior art method that uses elemental bromine or bromine chloride yields a solution with a higher active ingredient concentration than the method that uses a sodium hypochlorite solution with a source of bromide ion. Moore, *et. al.* overcame the complexity of the two-vessel reaction in U. S. patent nos. 6,068,861, 6,495,169, and 6,322,822 and disclosed a single-vessel reaction in which bromine or bromine chloride was added to a halogen stabilizer solution under conditions of pH control. These three patents disclosed two solutions (described in examples 4 and 5 of the '169 and '861 patents) having an active ingredient concentration of at least 19.6% as Br₂ (8.7% as Cl₂). However, no elevated temperature, chemical, or physical stability data was reported for either solution, and the present inventors have concluded that these two solutions are either unstable or have inferior stability.

The solution disclosed in example 5 of the '169 and '861 patents was reported to contain up to 26.7% as Br₂ (11.5% as Cl₂), but it had a pH of 7.0 and possessed a distinct bromine odor. It is well known that these types of solutions undergo acid-generating decomposition reactions upon storage. Thus, as the pH dropped below 7.0, highly toxic bromine vapors would have fumed from the solution and appeared as an orange/brown gas in the headspace of the container. This demonstrates that the solution of example 5 was physically unstable, and therefore, unacceptable for its intended use. The solution disclosed in example 4 of the '169 and '861 patents was reported to contain 19.6% as Br₂ (8.7% as Cl₂), with a pH of 13.0 and no odor of bromine. However, it has been concluded, as will be shown herein, that this solution has inferior chemical and physical stability.

Moreover, when the method using elemental bromine or bromine chloride was scaled up, as disclosed in U. S. patent nos. 6,306,441, 6,352,725 and 6,348, 219, the hypothetical maximum active ingredient concentration was reported to be 18% as Br₂ (8% as Cl₂). Subsequently, in U. S. patent nos. 6,506,418, 6,511,682, and 6,652,889, Moore, *et. al.* reduced this ceiling even further to 14.5%-16% as Br₂ (6.4-7.1% as Cl₂) and required the adjustment of the pH to greater than 10 in order to produce a useful product. The '418 patent, in example 2, described the maximum strength solution as one containing 14.8 % as Br₂ (6.59 % as Cl₂).

Published application WO 03/093171 disclosed a method for preparing a stabilized bromine solution with a halogen content higher than any previously reported solution prepared from hypochlorite and sodium bromide. Example 1 of WO 03/093171 described a cumbersome multi-step method. In the first step, an unstabilized solution of sodium hypobromite was made by adding elemental bromine to a sodium hydroxide solution and allowing the mixture to react. Introducing a solution of sodium sulfamate prepared by reacting sulfamic acid with a solution of sodium hydroxide followed this. The resulting product was determined to possess a halogen content of 19.6% as Br₂ (8.7% as Cl₂). Example 4 of the same application disclosed an even more complex multi-step method for preparing a solution reported to have a halogen concentration of 21.6% as Br₂ (9.6% as Cl₂). However, it appears to the present inventors that this concentration is erroneous because the maximum concentration that can be obtained from the stated quantities of the components (even assuming a 100% yield in every step), is calculated to be 19.7% as Br₂ (8.7% as Cl₂). In actuality, the concentration that was obtained was probably substantially less than 19.7% as Br₂ (8.7% as Cl₂), because it is well-known that the first step cannot proceed with a 100% yield.

The prior art also discloses that other methods also fail to yield satisfactory products in terms of higher active ingredient concentration, physical stability, and reaction efficiency. For example, Moore described a method in U.S. patent nos. 6,375,991 and 6,551,624 that used gaseous chlorine and a source of bromide ion. The reaction conditions sought the preparation of a solution possessing a theoretical bromine content of 16.8% as Br₂ (7.45% as Cl₂), but the actual amount reported was 10.4% as Br₂ (4.6% as Cl₂), corresponding to a yield of 66%. In addition, the resulting solution was stated to be physically unstable as sodium chloride salt precipitated from the aqueous phase towards the end of the reaction. Similarly, Yang, *et. al.* reported an identical phenomenon in U.S. patent no. 6,270,722.

Thus, the prior art teaches that convenient, efficient, scalable methods for preparing chemically and physically stable, liquid bromine-containing solutions will result in a product with an active ingredient concentration of 18% as Br₂ (8% as Cl₂) at the maximum.

Liquid bromine products that contain a higher level of active ingredient have significant economic advantages over more dilute products because a smaller amount of a more concentrated product can be used to achieve the equivalent dose of a weaker product. Also, more concentrated products need to be replaced less frequently than dilute products, and have reduced packaging, storage, and transportation costs per unit weight of active ingredient.

To be commercially viable, products with a high level of active ingredient must have two attributes. First, they must be chemically stable, i.e. they should maintain high activity for extended periods of time and not decompose quickly. Second, they must be physically stable, i.e. they must not emit dangerous fumes or precipitate or crystallize into solid salts that could plug pipe work and make the feeding of liquid materials grind to a halt.

Therefore, a need exists for methods of manufacturing liquid biocidal bromine solutions of enhanced chemical and physical stability that have a concentration of active ingredient greater than 18% as Br₂ (8% as Cl₂) and that conveniently employ elemental bromine or bromine chloride and a solution of sodium sulfamate. This invention addresses that need.

There is also a need for a method of producing a solid high-activity bromine-containing biocidal composition that is stable and fast dissolving. There are several solid, high-activity bromine-releasing compounds that are sold commercially as biocidal products. They are generally available as heterocyclic organic compounds to which an oxidizing bromine atom is covalently bonded to a nitrogen atom on the ring. Examples include N,N' bromochloro-5,5-dimethylhydantoin, 1,3-dibromo-5,5-dimethylhydantoin, and mixtures of these compounds with various other components. In water, these materials hydrolyze to release hypobromous acid, which is the biocidal agent. However, a major limitation of these solid compounds is that they are only sparingly soluble in water. Indeed, N,N' bromochloro-5,5-dimethylhydantoin has a water solubility of only 0.1% at 20° C. As a result, bromine is released very slowly from these products as they dissolve. This is a significant disadvantage when the water requires treatment with a high, rapid dose of biocidal bromine, for example, in shock and slug dosing procedures. The low solubility of these products also precludes application where there is insufficient solubility of these products also preludes application where there is insufficient water available to dissolve enough of the solid to deliver a biocidally-effective dose. This invention addresses those needs.

In an aspect of the invention there is provided method of preparing a bromine-containing liquid, comprising:
(a) combining solid sulfamic acid, water, and an alkaline source to form a solution of the salt of sulfamic acid, wherein said alkaline source is selected from the group consisting of alkali metal hydroxide and earth alkali metal hydroxide;
(b) adding a bromine source to said solution, wherein said bromine source is selected from the group consisting of bromine chloride and elemental bromine; and
(c) forming a bromine-containing liquid, wherein the amounts of said solid sulfamic acid, water, alkaline source, and bromine source are such that said bromine-containing liquid has an active ingredient concentration of greater than 18% as bromine or 8% expressed as chlorine, and further, wherein the total amounts of hydroxide ion and hydrogen source ion used in preparing said bromine-containing liquid are in a mole ratio of 2.0:1 to 2.86:1.

In an embodiment in step (a), said solid sulfamic acid is first dispersed in said water, followed by the addition of said alkaline source.

In an embodiment after the addition of said bromine source in step (b), adding a second alkaline source wherein said alkaline source is selected from the group consisting of alkali metal hydroxide and earth alkali metal hydroxide.

In an embodiment simultaneously with the addition of said bromine source in step (b), adding a second alkaline source wherein said alkaline source is selected from the group consisting of alkali metal hydroxide and earth alkali metal hydroxide.

In an embodiment said bromine-containing liquid retains at least 75% of its active ingredient after storage at 52°C (125°F) for at least 31 days.

In an embodiment an active ingredient concentration of greater than 18% as bromine or 8% expressed as chlorine, made in accordance with the method of claim 1.

In an embodiment said bromine-containing liquid retains at least 75% of its active ingredient after storage at 52°C (125° F) for at least 31 days.

### SUMMARY OF THE INVENTION

The present invention is directed to convenient methods of preparing: (1) highly concentrated liquid bromine-containing solutions and (2) highly concentrated mixed halogen liquid bromine and chlorine-containing solutions, and all having excellent physical and chemical stability.

Contrary to the teachings of the prior art, the present invention discloses methods in which elemental bromine or bromine chloride is introduced to a sulfamate solution to yield a final solution having a concentration of active ingredient in excess of 18% as Br₂ (8% as Cl₂). The methods of the present invention also yield a final solution having a mole ratio of hydroxide ion to hydrogen ion source (e.g. sulfamic acid plus Br₂ or BrCl) of greater than 1.62:1. In this context, the hydrogen ion source is defined as being the sum of the reagents that dissociate into strong acids in water, e.g. sulfamic acid or other acidic stabilizer plus Br₂ or BrCl. The present inventors have discovered that calculating this mole ratio is a more accurate way of determining the amount of hydroxide ion to use to obtain a final solution of high concentration, than the methods used by the prior art. The prior art methods use a pH measurement, and teach that the amount of hydroxide ion that should be added is the amount necessary to raise the pH to about 13. It is believed, however, that this method is unreliable because under conditions of high pH, glass electrodes suffer a phenomenon known as "alkaline error". The low activity of H⁺ ions in solution means that the electrode responds instead to the much higher concentration of Na⁺ ions, resulting in a pH measurement that is artificially low.

The methods of the present invention do not rely on a pH measurement, but rely instead on the mole ratio of hydroxide ion to hydrogen ion source. Utilizing this approach, it was unexpectedly discovered that this ratio is of critical importance to the chemical and physical stability of the finished product. Nowhere in the prior art is this mole ratio discussed. However, the present inventors have calculated the mole ratio for several of the solutions produced by introducing elemental bromine or BrCl to a solution of sodium sulfamate that have been disclosed in the prior art and found them all to be less than or equal to 1.62:1. For instance, in example 5 of U.S. 6,068,861 it was calculated that the method employed a hydroxide ion to hydrogen ion source (sulfamic acid plus Br₂) mole ratio of 1:1 and obtained a product that had a measured pH of 7. Example 4 of the same patent described a solution containing 19.6% as Br₂ (8.7% as Cl₂) that utilized a hydroxide ion to hydrogen ion source (sulfamic acid plus Br₂) mole ratio of 1.62:1. This solution had a measured pH of 13.0. No elevated temperature, chemical, or physical stability data was reported for either of these solutions. Example 2 of U.S. 6,506,418 described a method involving the addition of both Br₂ and Cl₂ to a solution of sodium sulfamate to a maximum strength solution of 14.8 % as Br₂ (6.59 % as Cl₂). Again, this utilized a hydroxide ion to hydrogen ion source (sulfamic acid plus Br₂ plus Cl₂) mole ratio of 1.62:1. Thus, solutions produced using the introduction of Br₂ or BrCl to a solution of sodium sulfamate that have a mole ratio of hydroxide ion to hydrogen ion source of greater than 1.62:1 have not been previously reported. As will be subsequently demonstrated, such solutions display dramatically enhanced chemical and physical stability over those in which the mole ratio is less than or equal to 1.62:1.

The products of the methods of this invention are sources of oxidizing bromine that are useful for microbiological control in aqueous systems. This is generally achieved by introducing the products into water requiring microbiological control in an amount sufficient to be biocidally effective. Applications include industrial water systems such as recirculating cooling water, once-through cooling water, air washer systems, decorative fountains, oil field injection water, oil well completion fluids, municipal and industrial wastewater, brewery pasteurizing water, hydrostatic sterilizer cooling water, pulp and paper processing water, and agricultural irrigation water. Other applications include residential water systems where the home consumer can apply the compositions in aqueous systems where microbiological control is necessary, such as pool and spa water, kitchen and bathroom rinses, toilet bowl rinses, and mold and fungus sprays for inside and outside the home.

The first embodiment of the invention is a method for preparing highly concentrated liquid bromine-containing solutions using elemental bromine or bromine chloride. The method yields solutions that have concentrations of bromine in excess of 18% as Br₂ (8% as Cl₂) and possess a hydroxide ion to hydrogen ion source (e.g. sulfamic acid plus Br₂ or BrCl) mole ratio of at least 1.9:1. They resist precipitation of inert salts, do not emit highly toxic bromine fumes, and yet display excellent retention of the active ingredient upon storage. Using the method of the first embodiment, solutions at concentrations of at least 19.7% as Br₂ (8.8% as Cl₂) can be prepared.

A very surprising aspect of the method of the first embodiment is that physically and chemically stable, liquid bromine-containing solutions prepared using elemental Br₂ or BrCl do not have a ceiling on their concentration of 18% as Br₂ (8% as Cl₂), as the prior art suggests. The stabilization is accomplished by employing a hydroxide ion to hydrogen ion source (e. g. sulfamic acid plus Br₂ or BrCl) mole ratio of at least 1.9:1.

### DETAILED DESCRIPTION OF THE INVENTION

### The First Embodiment

The first embodiment is a method for preparing highly concentrated liquid bromine-containing solutions using Br₂ or BrCl. Table I lists the basic components of solutions prepared using Br₂ or BrCl that contain an active ingredient of 18.1% as Br₂ (8.04% as Cl₂) and which possess a hydroxide ion to hydrogen ion source (sulfamic acid plus Br₂ or BrCl) mole ratio of 2.3:1. Higher concentrations than this are prepared by employing more elemental Br₂ or BrCl at the expense of sulfamic acid, water, or 50% sodium hydroxide solution provided the hydroxide ion to hydrogen ion source mole ratio does not drop below 1.9:1. The golden colored solutions that are produced using this method contain 27-39% or 35-52% more active bromine than solutions that are available commercially, respectively, depending on whether Br₂ or BrCl is used.

The method of this embodiment includes the following steps. Steps (a), (b), (c), and (d) may be performed sequentially or as otherwise set forth below. Steps (a) and (b) may be performed simultaneously, followed by the remaining steps. Steps (b) and (d) may be combined so that all of the alkaline source is added in step (b). If performed, step (d) may be conducted at the same time as step (c).

### a. Dispersing solid sulfamic acid in an aqueous phase.

Sulfamic acid displays moderate solubility in water (14.7 g/100 g at 0°C). When the amount of sulfamic acid added to water exceeds the solubility limit at any given temperature, some of the solid remains undissolved. Upon stirring the mixture, the sulfamic acid solids are dispersed in the aqueous phase. 'As indicated in Table III, the amount of water used to disperse the sulfamic acid depends on whether elemental bromine or bromine chloride is used. Preferably, a slurry of between about 25% and about 75% solid sulfamic acid in water is employed, with about 30% to about 40% being the most preferred range.

### b. Forming a solution of the alkali metal or earth alkali metal salt of sulfamic acid in the aqueous phase.

To the stirred dispersion of solid sulfamic acid in water is added an alkaline source in order to form a solution of alkali metal or earth alkali metal salt of sulfamic acid. Examples include, alkali metal or earth alkali metal hydroxides. When solutions are preferred, sodium hydroxide or potassium solutions are convenient to use, alone or in combination with each other. A particular preferred alkaline source is 50% NaOH solution. To prevent storage problems in cold climates, the 50% NaOH solution may be diluted with water and used. The alkaline source is introduced to the reaction medium slowly, with stirring and cooling such that the temperature preferably does not exceed 85°F. The amount of 50% NaOH solution employed should preferably be at least sufficient to fully neutralize the sulfamic acid and form sodium sulfamate according to equation (1).

NH₂SO₃H + NaOH → [NH₂SO₃⁻] [Na⁺] + H₂0 (I)

Preferably, a molar excess of 50% NaOH is utilized relative to the amount of sulfamic acid. The mole ratio of hydroxide ion to sulfamic acid is preferably between about 2: 1 and about 4:1, most preferably between about 2: 1 and about 3:1.

If available, solid alkali metal salts of sulfamic acid may be used. In these circumstances, it is only necessary to dissolve the salts in water to make a solution. Preferably, an additional quantity of 50% NaOH is then utilized. The mole ratio of hydroxide ion to alkali metal salt of sulfamic acid is preferably between about 1:1 and about 3:1, most preferably between about 1:1 and about 2:1.

### c. Introducing bromine chloride or elemental bromine.

The amount of bromine chloride or elemental bromine added depends on the amount of sulfamic acid originally present. A mole ratio of about 0.75: 1 to about 1.5: 1 sulfamic acid to bromine chloride or elemental bromine is advantageous to the stability of the final product, with about 0.95: 1 to about 1.2: 1 being the most preferred mole ratio range.

Table I shows the quantities of elemental bromine or bromine chloride needed to introduce to the reaction medium in order for the resulting solution to have an active ingredient concentration of 18.1% as Br₂ (8.04% as Cl₂). Higher concentrations than this are prepared by employing more elemental bromine or bromine chloride at the expense of sulfamic acid, water, or 50% NaOH solution provided the hydroxide ion to hydrogen ion source (sulfamic acid plus Br₂ or BrCl) mole ratio does not drop below about 1.9:1.

**Table I**

| | Br₂ (Wt%) | BrCl (Wt%) |
|---|---|---|
| Br₂ | 18.1 | ------ |
| BrCl | ------ | 13.0 |
| Sulfamic Acid | 13.2 | 13.2 |
| 50% NaOH | 45.8 | 45.8 |
| Water | 22.9 | 28.0 |

The bromine chloride or elemental bromine is dropped into the reaction medium from above the surface, or it may be introduced subsurface via a dip tube. When the latter is preferred, the dip tube should be positioned so.that the BrCl or Br₂ is introduced to an area of high turbulence, e.g. near the tip of a rotating agitator blade so that it is well dispersed into the reaction medium. For both supersurface and subsurface addition methods, the BrCl or Br₂ is added with sufficient mixing and at a rate to avoid significant phase separation and pooling of the materials at the bottom of the reactor.

With adequate mixing and dispersion, the BrCl or Br₂ introduced to the reactor containing the solution of sodium hydroxide and sodium sulfamate hydrolyzes readily according to reaction (2).

Br-X + H₂O → HOBr + HX (2)

X = Br or Cl

The hypobromous acid formed reacts with sodium sulfamate to form sodium N-bromosulfamate according to reaction (3),

HOBr + [NH₂SO₃⁻][Na⁺] → [Br-NHSO₃⁻][Na⁺] + H₂O (3)

The HBr or HCl that is generated in reaction (2) immediately undergoes an acid-base neutralization reaction with the excess sodium hydroxide present in solution as illustrated by reaction (4).

HX + NaOH → Na-X + H₂O (4)

X= Br or Cl

This is a strongly exothermic reaction, so the reaction medium is cooled, preferably to below about 85° F, to suppress the degradation of sodium N-bromosulfamate formed in reaction (3).
d. Adding an alkaline source to the reaction medium such that if the alkaline source is a hydroxide ion salt, the overall mole ratio of hydroxide ion to sulfamic acid is between about 3:1 and about 5:1, preferably between about 4:1 and about 5:1.

If desired, steps (b) and (d) may be combined so that all of the hydroxide ion charge is added in step (b), and the method concludes with step (c).

Any alkaline source may be employed. Examples include, but are not limited to, alkali metal or earth alkali metal carbonates, bicarbonates, oxides, and hydroxides. When solutions are preferred, sodium hydroxide or potassium hydroxide solutions can be used, alone or in combination with each other. A particularly preferred alkaline source is 50% NaOH solution. To prevent storage problems in cold climates, the 50% NaOH solution may be diluted with water and used. The alkaline source is introduced to the reaction medium slowly, with stirring and cooling, such that the temperature preferably does not exceed about 85°F.

When the sodium salt of sulfamic acid is employed, and when the alkaline source is 50% sodium hydroxide, the overall mole ratio of hydroxide ion to sodium sulfamate is preferably between about 2:1 and about 4:1, most preferably between about 3:1 and about 4:1.

### Example 1

Deionized water (52.5 ml) was introduced to a four-necked round bottom flask and solid sulfamic acid (24.9 g) was added. The slurry was stirred and 50% NaOH (44.6 g) was slowly added as the flask was chilled in an ice bath to keep the temperature of the flask contents below about 85°F. Using a dropping funnel, elemental bromine (41.2 g) was dispensed at a rate of about one drop per second to the reaction medium, also with stirring and cooling to maintain a reaction temperature below about 66 °F. After the addition was complete, 50% NaOH (37.6 g) was slowly added from the dropping funnel as the reaction flask was stirred and cooled. Iodometric titration of the resultant golden yellow solution yielded a bromine content of 19.8% as Br₂ (8.8% as Cl₂) that corresponded to a yield of 96.6% (based on the bromine charge). The solution possessed a hydroxide ion to hydrogen ion source (sulfamic acid plus Br₂) mole ratio of 2.0:1.

### (Prospective) Example 2

From the data in Table II, it is apparent that solutions prepared using BrCl will always contain more water than equivalent solutions prepared using elemental bromine. This is because BrCl has a molecular weight of 115.4 compared to 159.8 for elemental bromine. Therefore, because of their higher relative water content, solutions prepared using BrCl should be able to support the dissolution of even higher levels of active ingredient than their counterparts prepared using elemental bromine. In this prospective example, the Br₂ that was used in Example 1 is replaced with a molar equivalent amount of BrCl.

Deionized water (52.5 ml) is introduced to a four-necked round bottom flask and solid sulfamic acid (24.9 g) is added. The slurry is stirred and 50% NaOH (44.6g) is slowly added as the flask was chilled in an ice bath to keep the temperature of the flask contents at below 85°F. Using a dropping funnel, bromine chloride (29.7 g) is dispensed at a rate of about one drop per second to the reaction medium, also with stirring and cooling to maintain a reaction temperature below about 66 °F. When the bromine chloride addition is complete, the pH of the reaction medium is approximately 10.26. Then, 50% NaOH (37.6 g) is slowly added from the dropping funnel as the reaction flask is stirred and cooled. Assuming a yield of 96.6% (based on the bromine chloride charge), the resultant solution would have a bromine content of 21 % as Br₂ (9.3 % as Cl₂).

### Example 3

For the purposes of comparative elevated temperature stability testing, the reaction of Example 1 was repeated, except that a hydroxide ion to hydrogen ion source (sulfamic acid plus Br₂) mole ratio of 1.69:1 was employed.

Deionized water (69.1 ml) was introduced to a four-necked round bottom flask and solid sulfamic acid (24.6 g) was added. The slurry was stirred and 50% NaOH (44.6 g) was slowly added as the flask was chilled in an ice bath to keep the temperature of the flask contents below about 85°F. Using a dropping funnel, elemental bromine (41.2 g) was dispensed at a rate of about one drop per second to the reaction medium, also with stirring and cooling to maintain a reaction temperature below about 66 °F. After the addition was complete, 50% NaOH (24.5 g) was slowly added from the dropping funnel as the reaction flask was stirred and cooled. Iodometric titration of the resultant golden yellow solution yielded a bromine content of 19.6% as Br₂ (8.7% as Cl₂) that corresponded to a yield of 97% (based on the bromine charge).

Samples of the solutions prepared in Examples 1 and 3 were poured into capped plastic containers and placed in an oven held at 125°F. The amount of active ingredient remaining in the formulations was monitored as a function of time. The physical stability was established by visual observation of whether any solids precipitated from solutionover the same period. Table II shows the results.

**Table II**

| | Example 1 | | | Example 3 | | |
|---|---|---|---|---|---|---|
| Time/days | Mole ratio OH⁻:H⁺ source | | | Mole ratio OH⁻:H⁺ source | | |
| | 2.0:1 | | | 1.69:1 | | |
| | Wt% Br₂ | % Br₂ remaining | Solids Formed | Wt% Br₂ | % Br₂ remaining | Solids Formed |
| 0 | 19.8 | 100 | No | 19.6 | 100 | No |
| 4 | - | - | - | 14.8 | 75.6 | No |
| 5 | - | - | - | 13.7 | 70.0 | No |
| 6 | - | - | - | 12.8 | 65.3 | No |
| 7 | - | - | - | 11.7 | 59.7 | No |
| 10 | - | - | - | 10.3 | 52.5 | No |
| 11 | - | - | - | 9.9 | 50.5 | No |
| 12 | - | - | - | 9.0 | 45.9 | No |
| 13 | - | - | - | 7.0 | 35.7 | Slight |
| 14 | 17.3 | 87.4 | No | 2.0 | 10.2 | Slight |
| 31 | 15.1 | 76.2 | Slight | - | - | - |

It can be seen that the hydroxide ion to hydrogen ion source mole ratio has a dramatic effect on both the chemical and physical stability of solutions prepared with almost identical amounts of Br₂. The solution of Example 3, with the lower mole ratio, suffered a steady loss of Br₂ daily before rapidly declining at day 14 to possess only 10.3% of the original amount of Br₂. This was accompanied by a loss in physical stability as indicated by the precipitation of solids from the solution. In stark contrast, the solution of Example 1, with the higher mole ratio, retained 87.4% of its original Br₂ content after the same time period, and had not experienced any signs of physical instability. Even after 31 days, the Example 1 solution still retained 76.2% of its original activity, and only then began to exhibit solids precipitation.

## Claims

1. A method of preparing a bromine-containing liquid, comprising:
(a) combining solid sulfamic acid, water, and an alkaline source to form a solution of the salt of sulfamic acid, wherein said alkaline source is selected from the group consisting of alkali metal hydroxide and earth alkali metal hydroxide;
(b) adding a bromine source to said solution, wherein said bromine source is selected from the group consisting of bromine chloride and elemental bromine; and
(c) forming a bromine-containing liquid, wherein the amounts of said solid sulfamic acid, water, alkaline source, and bromine source are such that said bromine-containing liquid has an active ingredient concentration of greater than 18% as bromine or 8% expressed as chlorine, and further, wherein the total amounts of hydroxide ion and hydrogen source ion used in preparing said bromine-containing liquid are in a mole ratio of 2.0:1 to 2.86:1.

2. The method of claim 1, wherein in step (a), said solid sulfamic acid is first dispersed in said water, followed by the addition of said alkaline source.

3. The method according to claims 1 or 2, further comprising, after the addition of said bromine source in step (b), adding a second alkaline source wherein said alkaline source is selected from the group consisting of alkali metal hydroxide and earth alkali metal hydroxide.

4. The method according to claims 1 or 2, further comprising, simultaneously with the addition of said bromine source in step (b), adding a second alkaline source wherein said alkaline source is selected from the group consisting of alkali metal hydroxide and earth alkali metal hydroxide.

5. The method of claim 1, wherein said bromine-containing liquid retains at least 75% of its active ingredient after storage at 52°C (125° F) for at least 31 days.

6. A bromine-containing liquid having an active ingredient concentration of greater than 18% as bromine or 8% expressed as chlorine, made in accordance with the method of claim 1.

7. The bromine-containing liquid of claim 6, wherein said bromine-containing liquid retains at least 75% of its active ingredient after storage at 52°C (125° F) for at least 31 days.

## Patentansprüche

1. Verfahren zur Herstellung einer bromhaltigen Flüssigkeit, das Folgendes beinhaltet:
(a) Kombinieren von fester Sulfaminsäure, Wasser und einer Alkaliquelle zum Bilden einer Lösung des Sulfaminsäuresalzes, wobei die genannte Alkaliquelle aus der Gruppe bestehend aus Alkalimetallhydroxid und Erdalkalimetallhydroxid ausgewählt ist;
(b) Zugeben einer Bromquelle zu der genannten Lösung, wobei die genannte Bromquelle aus der Gruppe bestehend aus Bromchlorid und elementarem Brom ausgewählt ist; und
(c) Bilden einer bromhaltigen Flüssigkeit, wobei die Mengen der genannten festen Sulfaminsäure, an Wasser, Alkaliquelle und Bromquelle derart sind, dass die genannte bromhaltige Flüssigkeit eine Wirkstoffkonzentration von mehr als 18 %, als Brom, oder 8 %, ausgedrückt als Chlor, aufweist, und wobei ferner die Gesamtmengen an Hydroxidionen und Wasserstoffquellenionen, die zur Herstellung der genannten bromhaltigen Flüssigkeit verwendet werden, in einem Molverhältnis von 2,0:1 bis 2,86:1 vorliegen.

2. Verfahren nach Anspruch 1, wobei in Schritt (a) die genannte feste Sulfaminsäure zunächst in dem genannten Wasser dispergiert wird, gefolgt von der Zugabe der genannten Alkaliquelle.

3. Verfahren nach Anspruch 1 oder 2, das ferner nach der Zugabe der genannten Bromquelle in Schritt (b) das Zugeben einer zweiten Alkaliquelle beinhaltet, wobei die genannte Alkaliquelle aus der Gruppe bestehend aus Alkalimetallhydroxid und Erdalkalimetallhydroxid ausgewählt ist.

4. Verfahren nach Anspruch 1 oder 2, das ferner gleichzeitig mit der Zugabe der genannten Bromquelle in Schritt (b) das Zugeben einer zweiten Alkaliquelle beinhaltet, wobei die genannte Alkaliquelle aus der Gruppe bestehend aus Alkalimetallhydroxid und Erdalkalimetallhydroxid ausgewählt ist.

5. Verfahren nach Anspruch 1, wobei die genannte bromhaltige Flüssigkeit wenigstens 75 % ihres Wirkstoffs nach einer Lagerung bei 52°C (125°F) für wenigstens 31 Tage beibehält.

6. Bromhaltige Flüssigkeit mit einer Wirkstoffkonzentration von mehr als 18 %, als Brom, oder 8 %, ausgedrückt als Chlor, die mit dem Verfahren aus Anspruch 1 hergestellt wird.

7. Bromhaltige Flüssigkeit nach Anspruch 6, wobei die genannte bromhaltige Flüssigkeit wenigstens 75 % ihres Wirkstoffs nach einer Lagerung bei 52°C (125°F) für wenigstens 31 Tage beibehält.

## Revendications

1. Méthode de préparation d'un liquide contenant du brome, comprenant :
(a) la combinaison d'acide sulfamique solide, d'eau, et d'une source alcaline pour former une solution de sel d'acide sulfonique, ladite source alcaline étant sélectionnée parmi le groupe consistant en un hydroxyde de métal alcalin et un hydroxyde de métal alcalino-terreux ;
(b) l'addition d'une source de brome à ladite solution, ladite source de brome étant sélectionnée parmi le groupe consistant en le chlorure de brome et le brome élémentaire ; et
(c) la formation d'un liquide contenant du brome, les quantités desdits acide sulfamique solide, eau, source alcaline, et source de brome étant telles que ledit liquide contenant du brome ait une concentration en principe actif supérieure à 18 % en brome ou à 8 % exprimée en chlore, et en outre, les quantités totales d'ion hydroxyde et d'ion source d'hydrogène utilisées dans la préparation dudit liquide contenant du brome étant dans un rapport molaire de 2,0 à 2,86 à 1.

2. Méthode selon la revendication 1, dans laquelle à l'étape (a), ledit acide sulfamique solide est d'abord dispersé dans ladite eau, suivi par l'addition de ladite source alcaline.

3. Méthode selon les revendications 1 ou 2, comprenant en outre, après l'addition de ladite source de brome à l'étape (b), l'addition d'une seconde source alcaline, ladite source alcaline étant sélectionnée parmi le groupe consistant en [un] hydroxyde de métal alcalin et [un] hydroxyde de métal alcalino-terreux.

4. Méthode selon les revendications 1 ou 2, comprenant en outre, simultanément à l'addition de ladite source de brome à l'étape (b), l'addition d'une seconde source alcaline, ladite source alcaline étant sélectionnée parmi le groupe consistant en [un] hydroxyde de métal alcalin et [un] hydroxyde de métal alcalino-terreux.

5. Méthode selon la revendication 1, ledit liquide contenant du brome conservant au moins 75 % de son principe actif après stockage à 52°C (125° F) pendant au moins 31 jours.

6. Liquide contenant du brome ayant une concentration en principe actif supérieure à 18 % en brome ou à 8 % exprimée en chlore, obtenu selon la méthode de la revendication 1.

7. Liquide contenant du brome selon la revendication 6, ledit liquide contenant du brome conservant au moins 75 % de son principe actif après stockage à 52°C (125° F) pendant au moins 31 jours.
